# EUROPEAN PATENT SPECIFICATION

(11) **EP 3 044 793 B1**
(45) Date of publication and mention of the grant of the patent: **26.04.2017**
(21) Application number: 14766353.8
(22) Date of filing: 04.09.2014
(51) Int. Cl.: G11C 11/16, H04L 9/08, H04L 9/32

(54) **PHYSICALLY UNCLONABLE FUNCTION BASED ON RESISTIVITY OF MAGNETORESISTIVE RANDOM-ACCESS MEMORY MAGNETIC TUNNEL JUNCTIONS**
PHYSIKALISCH UNKLONBARE FUNKTION AUF DER BASIS DES WIDERSTANDES VON MAGNETORESISTIVEN DIREKTZUGRIFFSPEICHERMAGNETTUNNELÜBERGÄNGEN
FONCTION INCLONABLE PHYSIQUEMENT BASÉE SUR LA RÉSISTIVITÉ DE JONCTIONS TUNNEL MAGNÉTIQUES D'UNE MÉMOIRE VIVE MAGNÉTORÉSISTIVE

(30) Priority: 09.09.2013 US 201361875652 P; 11.11.2013 US 201314077093
(43) Date of publication of application: 20.07.2016
(73) Proprietor: Qualcomm Incorporated, San Diego, CA 92121-1714 (US)
(72) Inventor: ZHU, Xiaochun, San Diego, CA 92121-1714 (US); MILLENDORF, Steven, M., San Diego, CA 92121-1714 (US); GUO, Xu, San Diego, CA 92121-1714 (US); JACOBSON, David, M., San Diego, CA 92121-1714 (US); LEE, Kangho, San Diego, CA 92121-1714 (US); KANG, Seung, H., San Diego, CA 92121-1714 (US); NOWAK, Matthew Michael, San Diego, CA 92121-1714 (US)
(74) Representative: Howe, Steven
(86) International application number: PCT/US2014/054101
(87) International publication number: WO 2015/035053

(56) References cited:
- WO-A2-2004/114122
- WO-A2-2009/024913
- US-A1- 2004 042 292
- US-A1- 2012 106 235

## Description

### BACKGROUND

### Field

Various features relate to physically unclonable functions (PUFs), and in particular to PUFs based on the resistivity of Magnetoresistive Random-Access Memory (MRAM) Magnetic Tunnel Junctions (MTJs).

### Background

An on-chip PUF is a chip-unique challenge-response mechanism exploiting manufacturing process variations inside integrated circuits (ICs). When a physical stimulus (i.e., challenge) is applied to the PUF, the PUF generates a response in an unpredictable but repeatable way due to the complex interaction of the stimulus with the physical microstructure of the device employing the PUF. This exact microstructure depends on physical factors introduced during manufacture of the device employing the PUF, which are unpredictable. The PUFs "unclonability" means that each device employing the PUF has a unique and unpredictable way of mapping challenges to responses, even if one device is manufactured with the same process as another seemingly identical device. Thus, it is practically infeasible to construct a PUF with the same challenge-response behavior as another device's PUF because exact control over the manufacturing process is infeasible.

The PUF is unique for each chip, is difficult to predict, is easy to evaluate and is reliable. The PUF is individual and practically impossible to duplicate. Additionally, the PUF can serve as a root of trust and can provide a key that cannot be easily reverse engineered. The PUF can be used to protect critical data (keys or memories) from offline attacks.

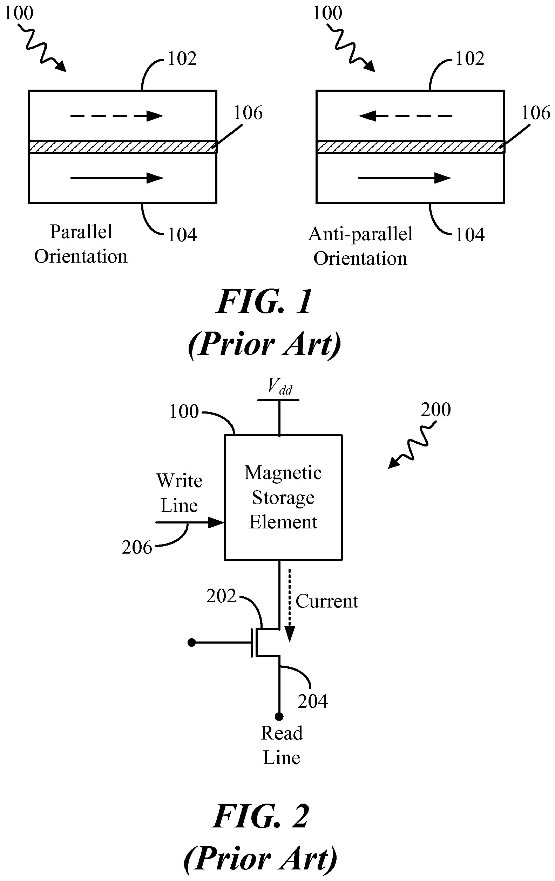

Magnetoresistive Random-Access Memory (MRAM) is a non-volatile random-access memory where unlike conventional RAM data is not stored as electric charge but is rather stored as electron spin within magnetic storage elements. FIG. 1 illustrates a simplified schematic diagram of the magnetic storage elements 100 that form part of an MRAM circuit cell found in the prior art (and depicted in FIG. 2). Referring to FIG. 1, the magnetic storage elements 100 include a first ferromagnetic layer 102 and a second ferromagnetic layer 104 that are separated by a very thin insulating layer 106. The magnetic layers 102, 104 each hold a magnetic field with a specific direction of polarity. The second magnetic layer 104 may be a permanent magnet with a magnetic polarity that is fixed (as shown by the solid arrow). The magnetic polarity of the first magnetic layer 102 is not fixed and may be changed by an external magnetic field (not shown). For example, as indicated by the dashed arrows the magnetic polarity of the first magnetic layer 102 may be oriented either parallel or antiparallel to the magnetic polarity of the second magnetic layer 104. The thin insulating layer 106 is made of a very thin insulating material that separates the two magnetic layers 102, 104. The thin insulating layer 106 is also known as a "tunneling layer" in that it is so thin that electrons can flow (i.e., tunnel) through its thickness between the two magnetic layers 102, 104 despite the tunneling layer 106 being an insulator.

If the polarity of the first magnetic layer 102 is oriented such that it is parallel to the second magnetic layer 104, then the resistance between the layers 102, 104 is relatively low (i.e., low resistance state). Such a state may be considered to represent a data bit "0" state. By contrast, if the polarity of the first magnetic layer 102 is oriented such that it is anti-parallel to the second magnetic layer 104, then the resistance between the layers 102, 104 is relatively high (i.e., high resistance state). Such a state may be considered to represent a data bit "1" state.

FIG. 2 illustrates an MRAM memory cell circuit 200. A transistor 202 coupled to the magnetic storage elements 100 controls the flow of current through the latter 100. If the transistor 202 is turned ON, then current flows through the magnetic storage elements 100. Depending on the resistance state (i.e., data bit state) of the magnetic storage elements 100, the current flow will be either relatively high or relatively low. Thus, data may be read from the MRAM circuit cell 200 by turning on the transistor 202 and ascertaining the current flow through the read-line 204. A relatively high current flow means the resistance state of the magnetic storage elements is low and thus a "0" bit is stored. A relatively low current flow means the resistance state of the magnetic storage elements is high and thus a "1" bit is stored.

Referring to FIGS. 1 and 2, data may be written to the cell 200 by changing the polarity of the first magnetic layer 102. A write-line 206 supplies a current to the magnetic storage elements 100 that causes the polarity of the first magnetic layer 102 to change direction, and thus the data bit stored changes from a "1" to a "0" or a "0" to a "1."

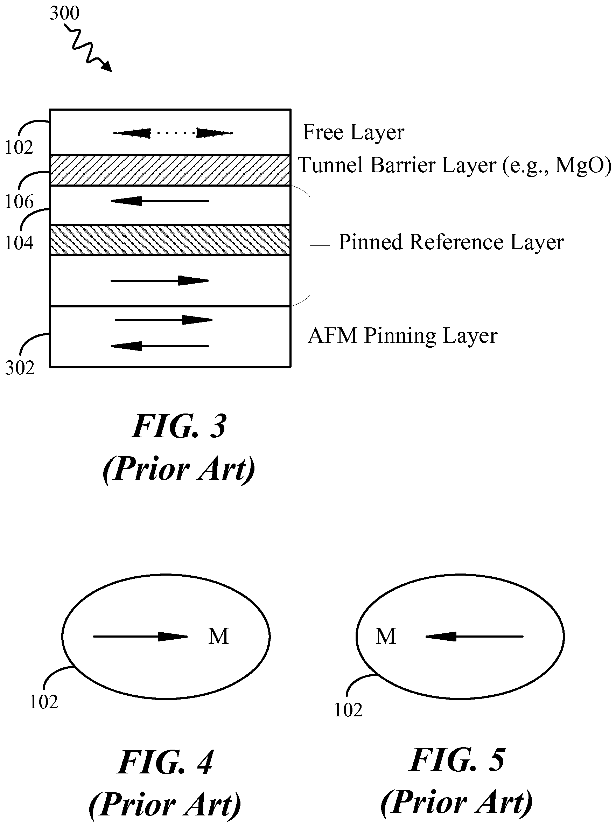

FIG. 3 illustrates another, more detailed example of a schematic diagram of the magnetic storage elements 100 that may form part of a spin transfer torque (STT) MRAM circuit cell 200. As shown, the first magnetic layer 102 may be referred to as the "free layer" and the second magnetic layer 104 forms a portion of the "pinned reference layer." The direction of the magnetic polarity of the free layer relative to the second magnetic layer 104 of the pinned reference layer determines the logical state of the STT MRAM cell 200 (e.g., parallel orientation of both layers 102, 104 is a "0" state and antiparallel orientation is a "1" state). An anti-ferromagnetic (AFM) layer 302 controls the magnetic polarity orientation of the pinned reference layer.

FIGS. 4 and 5 show top schematic views of the free layer 102 of the STT MRAM cell 200. Specifically, FIG. 4 shows the orientation of the magnetic polarity (arrow) of the free layer 102 according to a first state (e.g., state "0"), and FIG. 5 shows the orientation of the magnetic polarity (arrow) of the free layer 102 according to a second state (e.g., state "1"), which is opposite to that of the first state. The magnetic polarity of the free layer 102 will be oriented at one of those two directions along the long axis of the free layer 102 as shown.

US 2004/042292 relates to an MRAM in which the cells consist of magnetic tunnel junctions. In a write operation, data is read out before new data is stored, the read out data is compared to the new data to be stored, such that if the new data to be stored and the existing data are the same, there is no requirement to store the new data. WO 2004/114122 discloses an implementation of a physically unclonable function using an MRAM using a random function unit to generate a digital random code that is provided to the MRAM.

### SUMMARY

One aspect provides using a MRAM-based memory cell array to implement a physically unclonable function (PUF) as set out in claim 1.

Moreover, a method may include applying a plurality of magnetic fields to the array at a plurality of angles, wherein responses of the magnetic tunnel junctions are obtained for the plurality of magnetic fields. Furthermore, in one exemplary embodiment, the MRAM memory cells may each include two magnetic tunnel junctions. In this exemplary embodiment, a response may be obtained by ascertaining the resistance of only one of the two magnetic tunnel junctions. Alternatively, each MRAM memory cell may include two magnetic tunnel junctions. In this case, a response may be obtained by ascertaining the resistance of both of the two magnetic tunnel junctions.

### BRIEF DESCRIPTION OF DRAWINGS

FIG. 1 illustrates a simplified schematic diagram of the magnetic storage elements that form part of an MRAM circuit cell.
FIG. 2 illustrates an exemplary MRAM memory cell circuit.
FIG. 3 illustrates another, more detailed example of a schematic diagram of the magnetic storage elements.
FIG. 4 shows the orientation of the magnetic polarity (arrow) of the free layer of FIG. 3 according to a first state.
FIG. 5 shows the orientation of the magnetic polarity (arrow) of the free layer of FIG. 3 according to a second state.
FIG. 6 conceptually illustrates a Physically Unclonable Function (PUF) implementation for a MRAM circuit.
FIG. 7 conceptually illustrates the magnetic orientation of different layers of a magnetic tunnel junction within a memory cell.
FIG. 8 illustrates an exemplary array of MRAM memory cells.
FIG. 9 illustrates a schematic view of the MRAM cell.
FIG. 10 illustrates an example of how the resistance of the two magnetic tunnel junctions and may be determined.
FIG. 11 conceptually illustrates a device including an array of one hundred cells (C00-C99) coupled to an interface.
FIG. 12 illustrates a schematic view of another example of a MRAM cell that is operationally coupled to a MTJ_RB line and a MTJ_R line.
FIG. 13 illustrates a graph of the resistance distribution for a MRAM array at both state "0" and state "1".
FIG. 14 illustrates how MRAM cells may be subjected to varying angles Θ of external magnetic fields.
FIG. 15 illustrates an exemplary schematic block diagram of a hardware implementation for an electronic device that includes an MRAM array.
FIG. 16 is a block diagram illustrating an exemplary challenge device adapted to challenge an electronic device as part of a challenge/response PUF protocol.
FIG. 17 is a block diagram illustrating an exemplary electronic device adapted to obtain responses from as part of a challenge/response PUF protocol.
FIG. 18 illustrates a flow diagram of a method for obtaining a response to a challenge for a physically unclonable function (PUF).
FIG. 19 illustrates a flow diagram of a method for obtaining a response to a challenge for a physically unclonable function (PUF).

### DETAILED DESCRIPTION

In the following description, specific details are given to provide a thorough understanding of the various aspects of the disclosure. However, it will be understood by one of ordinary skill in the art that the aspects may be practiced without these specific details. For example, circuits may be shown in block diagrams in order to avoid obscuring the aspects in unnecessary detail. In other instances, well-known circuits, structures, and techniques may not be shown in detail in order not to obscure the aspects of the disclosure.

The word "exemplary" is used herein to mean "serving as an example, instance, or illustration." Any implementation or aspect described herein as "exemplary" is not necessarily to be construed as preferred or advantageous over other aspects of the disclosure. Likewise, the term "aspects" does not require that all aspects of the disclosure include the discussed feature, advantage, or mode of operation.

### Overview

Methods and apparatuses are described herein that implement physically unclonable functions (PUFs) based on Magnetoresistive Random-Access Memory (MRAM) circuit cell arrays. Specifically, the unique and random resistances of individual Magnetic Tunnel Junctions (MTJs) of the MRAM circuit cells of an MRAM array are utilized as the basis for implementing and executing a PUF. The responses generated by the MRAM-based PUF may be used to uniquely identify an electronic device, such as an integrated circuit, that incorporates the MRAM-based PUF. Alternatively, the memory cell responses generated by the PUF may be used as secure cryptographic keys for cryptographic security algorithms. Novel devices and methods are described herein that utilize MRAM circuits to generate PUFs.

### Exemplary MRAM Based PUF and Methods for Implementing the Same

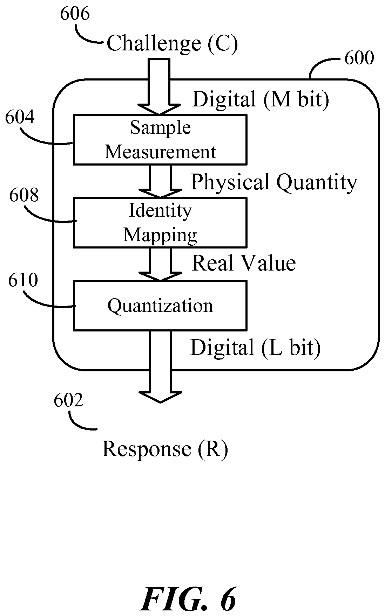

FIG. 6 conceptually illustrates a Physically Unclonable Function (PUF) implementation for a MRAM circuit. A memory device 600 may be configured to provide a response 602 upon receiving a challenge 606. In one example, the memory device 600 may be found within a chip or semiconductor incorporating a physically unclonable function based on a plurality of memory cells or memory array.

The challenge 606 may be an indication of a memory cell or plurality of memory cells (e.g., memory cell array) to be queried or from which a response is to be obtained. A sample measurement 604 may be made to ascertain one or more responses from the memory cells. In one example, such sample measurements 604 may be taken for multiple memory cells (e.g., within a memory array or at multiple locations on a chip or multiple chips). These memory cells (or locations thereof) may be indexed or mapped 608 to the corresponding measurements or responses and can be quantized 610 in different manners (e.g., percentages, absolute values, logical states, etc.). In this manner, a unique set of responses 602 may be obtained from the memory cells of the memory device 600 and the precise memory cells contributing such responses may be identified for subsequent authentication.

During manufacture of memory cells (e.g., MRAM cells), the manufacturing processes induce MTJ resistance variation naturally. In other words, no identical memory arrays of MTJ-based memory cells are manufactured. With MRAM memory cells based on magnetic tunnel junctions, each junction can have a different resistivity that can be assigned a value that may be used to generate a value of each memory cell. The resistance of each memory cell may serve, indirectly or directly, to generate a "response" corresponding to the particular memory cell from which it is obtained. Alternatively, each MRAM memory cell can be assigned a value based on the relative resistivity of the two magnetic tunnel junctions that make up each MRAM memory cell.

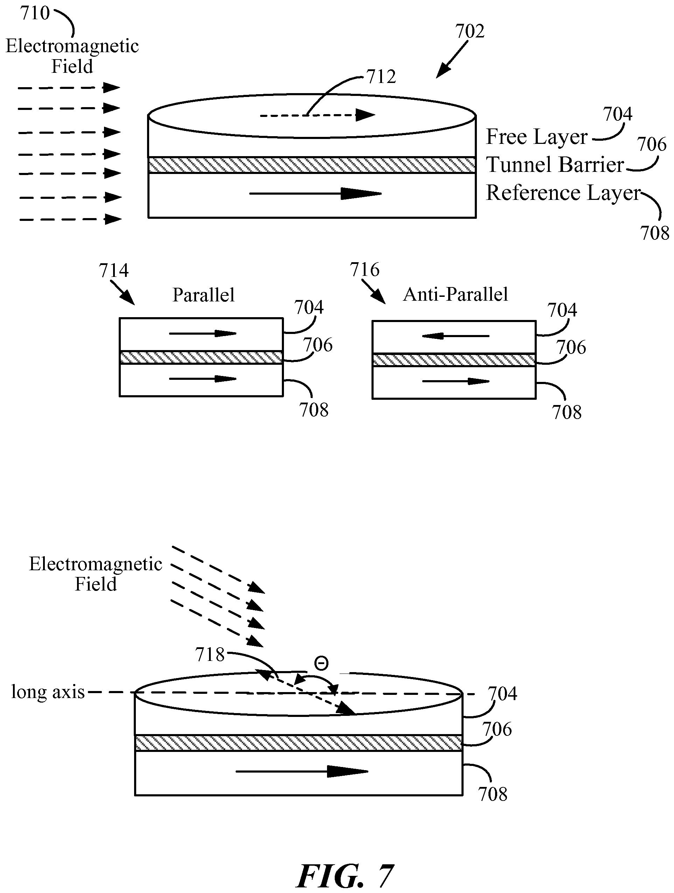

FIG. 7 conceptually illustrates the magnetic orientation of different layers of a magnetic tunnel junction within a memory cell. The MRAM memory cell 702 may include a free layer 704, a tunnel barrier layer 706, and a reference layer 708. The free layer 704 may be exposed to an electromagnetic field 710 that sets its magnetic orientation 712. The MRAM cell 702 can be forced to different magnetic orientations (e.g., parallel 714 or anti-parallel 716) depending on the orientation of the electromagnetic field used. In one example, the MRAM cell 702 can be forced to a parallel orientation 714, where the magnetic orientation of the reference layer 708 and free layer 704 coincide or are parallel to each other. In another example, the MRAM cell 702 can be forced to an antiparallel orientation 716, where the free layer 704 is anti-parallel to the reference layer 707.

The logic state (e.g., zero or one) of a particular memory cell may be defined by whether the MTJs of the memory cell are parallel 714 (e.g., logic state zero) or anti-parallel (e.g., logic state one). However, the electromagnetic field 710 helps align the free layer 704 for the two MTJs of a memory cell in the same orientation. The resistance of each MTJ is dictated by the manufacturing/fabrication process as well as the magnetic orientation (e.g., parallel or anti-parallel) of the MTJs. The relative resistances for a first MTJ (e.g., resistance MTJ_1) and a second MTJ (e.g., resistance MTJ_2) for a particular memory cell may be used to generate a "response" for the memory cell. For example, for a MRAM cell, the measured/estimated/ascertained resistance of a first MTJ may be defined as MTJ_1, and the measured/estimated/ascertained resistance of a second MTJ may be defined as MTJ_2. When both MTJs are in a parallel magnetic orientation and MTJ_1 < MTJ_2, the memory cell may be deemed to be a logical zero (0). Similarly, when both MTJs are in a parallel magnetic orientation and MTJ_1 > MTJ_2, the memory cell may be deemed a logical one (1). Moreover, when both MTJs are in an anti-parallel magnetic orientation and MTJ_1 < MTJ_2, the memory cell may be deemed a logical zero (0). Likewise, when both MTJs are in an anti-parallel magnetic orientation and MTJ_1 > MTJ_2, the memory cell may be deemed a logical one (1).

Note that, if MTJ_1 < MTJ_2 when the MTJs are in a parallel orientation, MTJ_1 may be greater than MTJ_2 (i.e., MTJ_1 > MTJ_2) or MTJ_1 may be smaller than MTJ_2 (i.e., MTJ_1 < MTJ_2) when the MTJs are in an antiparallel orientation. In addition, if MTJ_1>MTJ_2 when the MTJs are in a parallel orientation, MTJ_1 may be smaller than MTJ_2 (i.e., MTJ_1 < MTJ_2) or MTJ_1 may be larger than MTJ_2 (i.e., MTJ_1 > MTJ_2) when the MTJs are in an antiparallel orientation.

While the magnetic orientation examples 702, 714 and 716 have illustrated magnetic orientations along a long axis, in other examples a magnetic orientation 718 may be at some angle Θ relative to the long axis. For example, either MTJ_1 < MTJ_2 or MTJ_1 > MTJ_2 is possible, for magnetizations in both parallel and anti-parallel orientations having the same angle Θ relative to their long axis. Additionally, the resistance difference of MTJ_1 and MTJ_2 determines whether the MRAM cell has a value "D" of "0" or "1". Alternatively stated, the unpredictable and uncontrollable MTJ resistance local variations (e.g., resulting from manufacture/fabrication process variations) make each memory cell a physically unclonable function (PUF) and a value derived from such resistance variations serves as the response (e.g., logical 0 or logical 1) for each memory cell.. However, for memory cells deemed a logical zero (e.g., MTJ_1 < MTJ_2) each memory cell will have a different value for the resistance difference MTJ_2-MTJ_1. Defining this resistance difference Cell_{dif} = MTJ_2-MTJ_1, different memory cells will have different Cell_{dif} values that can be indexed or mapped to create a unique identifier. For memory cells deemed a logical one (e.g., MTJ_1 > MTJ_2) each cell will have a different value for MTJ_1-MTJ_2. Defining this resistance difference Cell_{dif} = MTJ_1-MTJ_2, different memory cells will have different Cell_{dif} values that can be indexed or mapped to create a unique identifier. Alternatively, Cell_{dif} can be MTJ_2-MTJ_1 for all cells allowing for negative values for logical one (1) memory cells.

In addition, Cell_{dif} can be MTJ_1-MTJ_2 for all cells allowing for negative values for logical zero cells. To clarify, Cell_{dif} may be defined differently depending upon the logical state (i.e., logical 0 or 1) for a memory cell such that Cell_{dif} is always positive. Moreover, Cell_{dif} may be defined such that negative values are allowed. Alternatively, Cell_{dif} can be an absolute value of ( |MTJ_1-MTJ_2| or |MTJ_2-MTJ_1|) such that all values are positive. Still another alternative is to use percentages to assign unique values for each cell (e.g., MTJ_1/(MTJ_1+MTJ_2) or MTJ_2/(MTJ_1+MTJ_2)). Still other operations can be used to build an index or map. For example, each edge cell may be assigned a value as explained above, but interior cells may make use of neighboring cells also. Any imaginable weighting schemes may be employed. As an example, an initial map is created using any of the Cell_{dif}s above, and then that map may be convoluted or perturbed to obtain a derived map. One example would be to take a type of weighted average, such as making Cell_{dif}new =½ * (Cell_{dif} + (summation of all neighboring cells' Cell_{dif})/number of neighboring cells)). In other words, for an interior cell with 8 neighbors, all neighbors Cell_{dif}s are added together and then that sum is divided by 8, with that result added to the interior cell's Cell_{dif} and then halved (or not). Other than the just described example of one type of neighbor smoothing, whole rows and/or columns can be used to alter (i.e., vary, perturb, convolute etc.) an initial Cell_{dif} into an altered Cell_{dif}. Additionally, rows and/or columns may be normalized. Instead of dividing the sum of neighbors by the number of neighbors, no division may take place or any number may be used to divide by. One purpose of the herein described data manipulations is to provide a pseudorandom appearing layer to the final map or index to increase the difficulty of reverse engineering the PUF or the PUF challenge/response protocol. Another way to increase the complexity of the final map is to use different definitions of Cell_{dif} in different areas of the chip. In addition to using data manipulation to add complexity, data compression algorithms may also be employed to reduce the size of the final map or index. Another way to reduce the size of the final map is to only challenge a percentage of cells as detailed below.

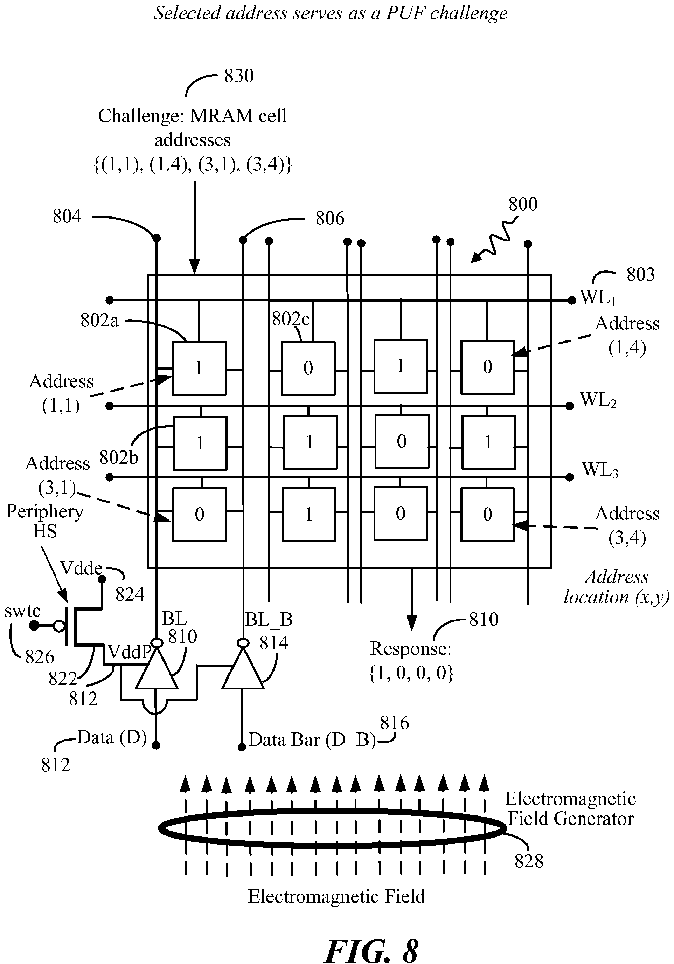

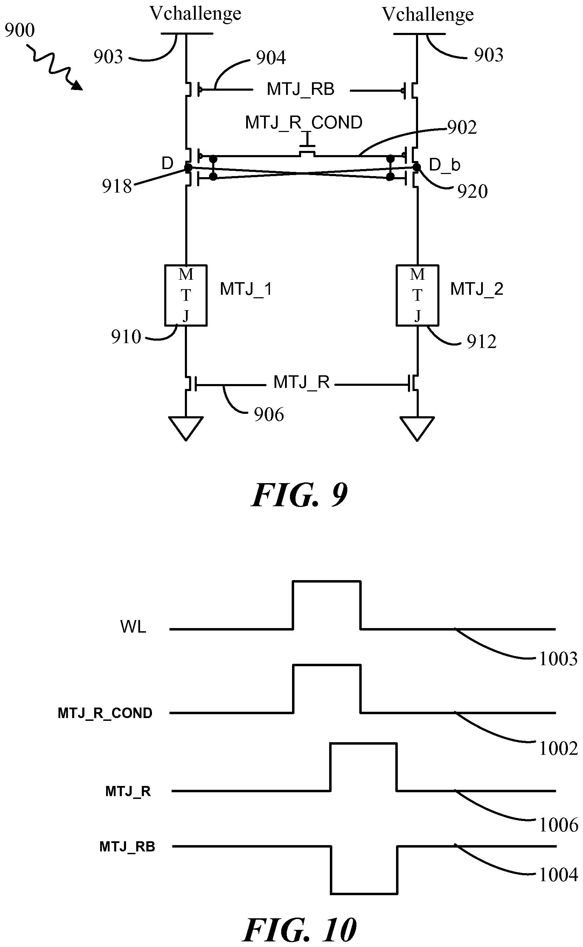

FIG. 8 illustrates an array 800 of MRAM cells 802. As is known in MRAMs, each cell 802a, 802b, 802c, is connected to a write line 803 (WL), a bit line 804 (BL) and an inverse bit line, 806 (bitline_bar, BL_B or BB). A first inverter 810 is coupled to a data (D) line 812 (shown in FIG. 9 as 918) and also coupled to the BL 804. A second inverter 814 is coupled to a data bar (D_B) line 816 (shown in FIG. 9 as 920) and outputs the BL_B 806. The first and second inverters 810 at 814 are powered from a periphery source voltage VddP 820 provided by a periphery head switch 822 which has its source coupled to an external voltage source Vdde 824 and its gate to a switch (swtc) signal 826 and or other type of signal. In one example, the switch is a sleep signal (slp) that is deasserted (slp=0), when the memory is in active mode (i.e., either a read or write operation is going on). The sleep signal (slp) is asserted (slp=1) to reduce the leakage when not in active mode (i.e., sleep mode). Alternatively, the switch signal 826 is used for other purposes than as a sleep signal and, in general, controls inverters 810 and 814. A electromagnetic field generator 828 may be positioned outside are external to array 800 but sufficiently proximate such that an electromagnetic field generated by the electromagnetic field generator 828 initializes the MRAM cells 802 of array 800 as explained in greater detail below. Each memory cell 802 is connected to a bit line 804 and a bit line bar 806.

Note, in FIG. 8 each MRAM cell 830 is either a zero or a one in an uninitialized state. In other words, FIG. 8 illustrates a random distribution of ones and zeroes in a naturally occurring random state because of uncontrollable variations in manufacturing processes. This exact microstructure illustrated depends on physical factors introduced during manufacture of the device employing the PUF, which are unpredictable. FIG. 8 illustrates an exemplary challenge-response system using the MRAM based PUF according to one aspect. A challenge 830 may be received at the MRAM based PUF that includes MRAM cell address information. That is, the challenge 830 may specify which MRAM cell address locations are to be read. In the illustrated example, the challenge 830 specifies that address locations {(1,1), (1,4), (3,1), (3,4)} of the MRAM array 800 are to be read. The response 806 to that challenge 830 is {(1), (0), (0), (0)} (i.e., the value of each location). The MRAM array is uninitialized and randomly biases in a first logical state (e.g., "0") or a second logical state (e.g., "1") based upon resistance values of MTJ_1 and MTJ_2 for every cell. In response to the challenge 830, the logical states of the uninitialized MRAM cell address locations are read/retrieved or determined for the first time. The resulting logical states read from the uninitialized MRAM cells may serve as the response 810 to the challenge 830 issued. The resulting logical states of uninitialized MRAM cells are unique in that other uninitialized MRAM cell arrays, even if attempted to be manufactured identically, will vary in their logical state responses given the same challenges (i.e., same MRAM cell address location read requests) due to uncontrollable manufacturing variation.

The challenge 830 may be implemented by application of a voltage to the cells identified by a memory address or block of addresses. The application of voltage may be direct from, for example, a line such as a write line (WL) connected to a memory cell or the voltage may be induced through the use of an electromagnetic field.

As one example, the response(s) 810 may be used as a cryptographic key or signature that uniquely identifies an electronic device and/or the integrated circuit that houses the MRAM cell array 800. As another example, the response 810 may be used as a random, unique key in a cryptographic security algorithm, such as a private key in a key encryption algorithm.

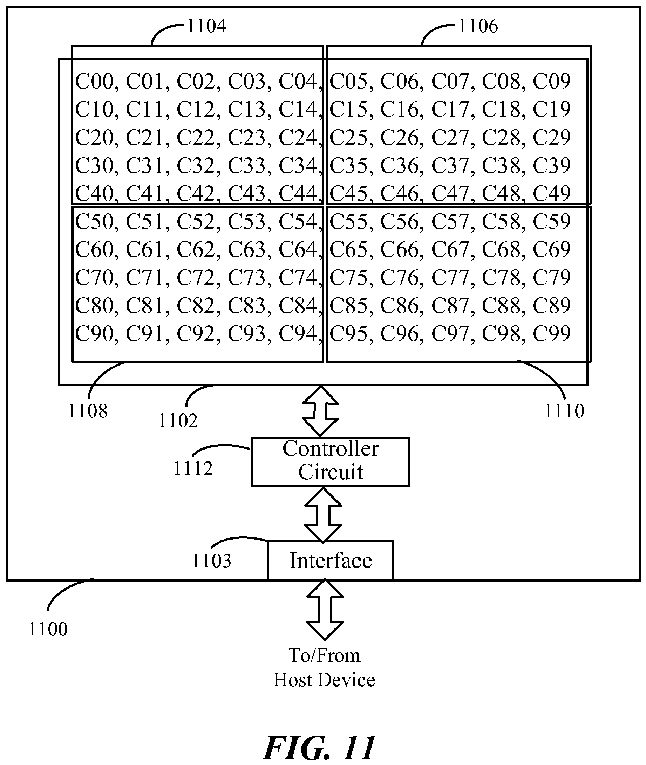

FIG. 9 shows a schematic view of an MRAM cell 900 operationally coupled to a write line 903, a MTJ_R_COND line 902, a MTJ_RB line 904, and a MTJ R line 906. The MRAM cell 900 may include two magnetic tunnel junctions, a MTJ_1 910 and a MTJ_2 912. A data line 918 is coupled to MTJ_1 910, and a data line bar 920 is coupled to MTJ_2 912. When a challenge is aimed at the MRAM cell 900, the same or different voltages on a MTJ_R_COND line 902, a MTJ_RB line 904, a MTJ_R line 906, a data line 918, a data line bar 920, and/or a source Vchallenge 903 may serve to setup or induce a current through the MTJ_1 910 and/or MTJ-2 912 which may be used to estimate or ascertain a resistance of each of the MTJs 910 and 912. The resistance of MTJ_1 and MTJ_2 can be obtained and logical values assigned as described with respect to FIG. 6 by comparing the respective resistances. The values of multiple cells 900 may be mapped or indexed to create a unique identifier of a device containing the multiple cells 900. Note not all cells need be evaluated, in one example only a subset of the available memory cells are ascertained and indexed. Alternatively, multiple unique identifiers can be generated. For example, the device may have a plurality of memory cells 900 arranged in an array that can be separated into quadrants and each quadrant can be challenged producing a quadrant specific unique identifier for each quadrant as explained below with respect to FIG. 11.

FIG. 10 illustrates an example of how the resistance of the two magnetic tunnel junctions 710 and 712 may be determined. When a write line 1003 goes high and a current is present, a MTJ_R_COND line 1002 is also brought high. After a time has passed, for example, one-half of a clock cycle, a MTJ_R line 1006 is brought high while a normally high MTJ_RB line 1004 is brought low. In one embodiment, the MTJ_R line 1006 is the magnetic tunnel junction read line and the MTJ_RB line 1004 is the magnetic tunnel junction read bar line and is always the inverse of the magnetic tunnel junction read line 1006. The voltages across MTJ_1 710 and a MTJ_2 712 are ascertained and the respective resistances are calculated. When MTJ_1 < MTJ_2 (parallel) the cell is deemed a logical zero, and when MTJ_1 > MTJ_2 (parallel) the cell is deemed a logical one. Moreover, when MTJ_1 < MTJ_2 (anti-parallel) the cell is deemed a logical zero, and when MTJ_1 > MTJ_2 (anti-parallel) the cell is deemed a logical one.

FIG. 11 conceptually illustrates a device 1100 including a memory array 1102 of one hundred memory cells (C00-C99) coupled to an interface 1103. The device 1100 may include an interface 1103 that couples the device 1100 to an a host device and a controller circuit 1112 that may control operation of the memory array 1102. In one example, the controller circuit 1112 may be adapted to control currents and voltages applied to individual memory cells, ascertain resistances of the MTJs within the cells, read and/or write to the cells and, in general, managing the cells and all data flows into and out of the array 1102. The interface 1103 can generate the PUF maps as described herein and can store the maps. The interface 1103 can be on the same chip as the array 1102, as part of the array 1102 itself, or the interface 1103 can be separate from the array 1102. The interface 1103 includes processor means and includes or controls write lines, read lines, and other data lines and/or buses.

In this example, the memory array 1102 is a ten cell by ten cell memory array for ease of understanding. Actual memory arrays can be any size (e.g., 10000 x 10000, 1 million x 1 million, etc.) and do not need to be square (e.g., X by Y, where X is not equal to Y). The memory array 1102 can be logically segmented into quadrants 1104, 1106, 1108, and 1110 (or any other subdivision). A unique identifier may be generated from cell information for the one or more quadrants. For example, all or some of the memory cells in a first quadrant 1104 can be challenged and a unique identifier generated for the cell responses within the first quadrant 1104. Similarly, identifiers can be generated for the other quadrants 1106, 1108, and 1110. In one example, each memory cell may be challenged and the result for each quadrant is a 25-bit string of zeros and ones (i.e., the 25-bit string combines the responses from twenty-five memory cells in said quadrant). Each 25-bit string identifies each quadrant 1104, 1106, 1108, and 1110 respectively. The 25-bit strings can be logically combined to generate a unique identifier for the memory array 1102 or part of the memory array 1102. In one example, the string for a first quadrant 1104 can be added to, concatenated, or logically AND-ed or OR-ed with the string for a second quadrant 1106 to create a first identifier. Similarly, the string for a third quadrant 1108 can be logically AND-ed or OR-ed with the string for a fourth quadrant 1110 to create a second identifier (or the two strings may be combined or concatenated to form one string of double length). In addition, the string for the first quadrant 1104 can be added to, concatenated, or logically AND-ed or OR-ed with the string for the third quadrant 1108 to create a third identifier. Additionally, the string for the second quadrant 1106 can be added to, concatenated, or logically AND-ed or OR-ed with the string for the fourth quadrant 1110 to create a fourth identifier.

Similarly, the strings for the first quadrant 1104 and the fourth quadrant 1110 can be added to, , concatenated, or logically AND-ed or OR-ed with each other to create a first diagonal half identifier. In addition, the strings for the second quadrant 1106 and the third quadrant 1108 can be added to, concatenated, or logically AND-ed or OR-ed with each other to create a second diagonal half identifier. Additionally, the inverses of any or all the quadrant strings can be generated, and these inverse strings used both as quadrant identifiers and in obtaining the half identifiers. Moreover, instead of OR-ing the strings to create identifiers (or any type of partial array identifier) an exclusive XOR-ing can be done. As used herein the term "added to" typically means combined to form a longer string. However, mathematical addition is also possible and any carry over bit may be discarded, or the result may be shifted when a carry-over occurs to keep the carry over bit and to discard the least significant bit. Alternatively, in some embodiments the carry over bit is kept by lengthening the string one bit.

In addition, instead of quadrants as illustrated in FIG. 11, each row or column can be used to generate a unique identifier. Furthermore, the quadrant strings can be shifted prior to the AND-ing or OR-ing operations. Moreover, in the case of unevenly sized subdivisions of the array 1102, the strings can be truncated if desired. Truncation may be desirable even with equally sized subdivisions. For example, in one embodiment all the memory cells in the first quadrant 1104 may be challenged and the response is a 25-bit string, but only a portion of cells in the second quadrant 1106 are challenged resulting in a string size less than 25 bits, the 25-bit string can be reduced to the same size as the smaller string. The reduction can be achieved by removing bits from the front, the middle, the end or even randomly.

Additionally, string size reduction may be advantageous even when all the strings are of equal size. For example, with challenging all the cells in each quadrant, 1104, 1106, 1108, and 1110, and obtaining four 25-bit strings, the AND-ing and OR-ing described above may be best implemented with 8 bit registers and to ease computation overhead and speed up the AND-ing and OR-ing, each string is reduced down to an 8 bit segment or size and stored in an 8 bit register. Alternatively, the four 25-bit strings (or their compliments, or a shifted version of the original or compliment) can be added or concatenated together to form a 100-bit array identifier. Note that the 25-bit string for each quadrant is a map of that quadrant. Furthermore, the 100-bit string of the array qualifies as an index or map of the array. Additionally, calling the 25-bit string associated with the first quadrant 1104 "A", second quadrant 1106 "B", third quadrant 1108 "C", and fourth quadrant 1110 "D", the 100-bit string can be ordered ABCD, BCDA, DACB, and so forth resulting in 24 permutations (4!) of a unique array identifier. Including inverses of A, B, C, and D increases the permutations to 8! which is 40,320. Although the permutations change the mapping of the array, each permutation itself is still a map or an index even if somewhat convoluted. Allowing any of the 25-bit stings to be shifted up to 24 times in addition to the un-shifted string allows for many permutations of that string alone. Moreover, device 1100 may contain other elements besides the array 1102 that can have unique identifiers. Those other identifiers can be combined with the array's 1102 identifier to create a device 1100 identifier. These data manipulations allow for increasing the complexity of the resulting map or generated cryptographic security key, which increases the difficulty of reverse engineering the map or key.

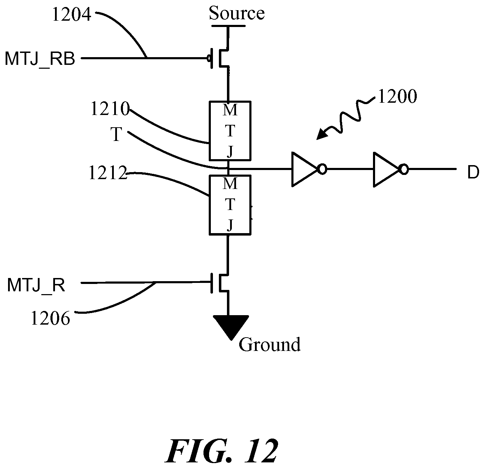

Returning to the cell level, FIG. 12 illustrates a schematic view of another example of a MRAM cell 1200 that is operationally coupled to a MTJ_RB line 1204 and a MTJ_R line 1206. The MRAM cell 1200 includes the two magnetic tunnel junctions, MTJ_1 1210 and MTJ_2 1212. Here, the voltage ascertaining and therefore the resistance ascertaining can be made with or without ascertaining the voltage across MTJ_2 1212. With MTJ_2 1212 present, the circuit illustrated in FIG. 12 is a voltage divider circuit with one voltage between ground and a terminal "T" and a second voltage between the source and T. When MTJ_2 is not present, the voltage is divided between MTJ_1 and the transistor coupled to MTJ_R line; when MTJ_2 is present, the voltage is divided between MTJ_1 and MTJ_2 (the transistor coupled to MTJ_R line can be designed to have small resistance). The two inverters between T and D are used to amplify signals. Note that just by ascertaining the resistance of MTJ_1 1210, each cell has a PUF, because each MTJ_1 of the different cells will have different resistance values. For the same reason, just by ascertaining the resistance of MTJ_2 1212, each cell has a PUF, because each MTJ_2 of the different cells will have different resistance values. Alternatively, any of the above described Cell_{dif}s can be generated and maps created.

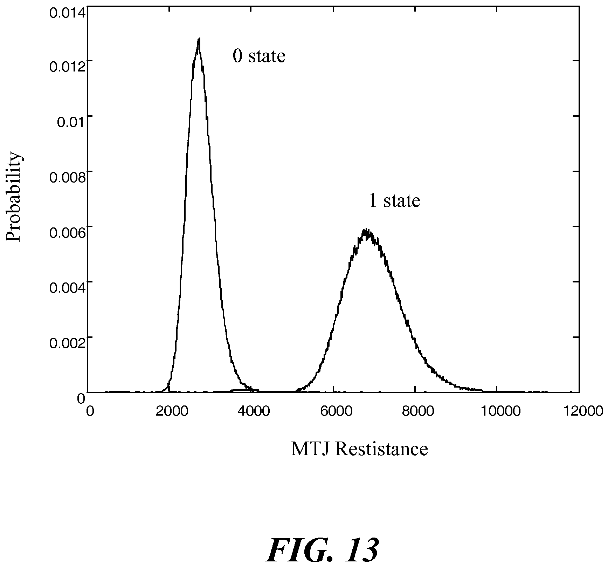

FIG. 13 illustrates a graph of the resistance distribution for a MRAM array at both state "0" and state "1". An empirical examination of silicon (Si) has shown the resistance variations at both "0" and "1" states have a random Gaussian distribution.

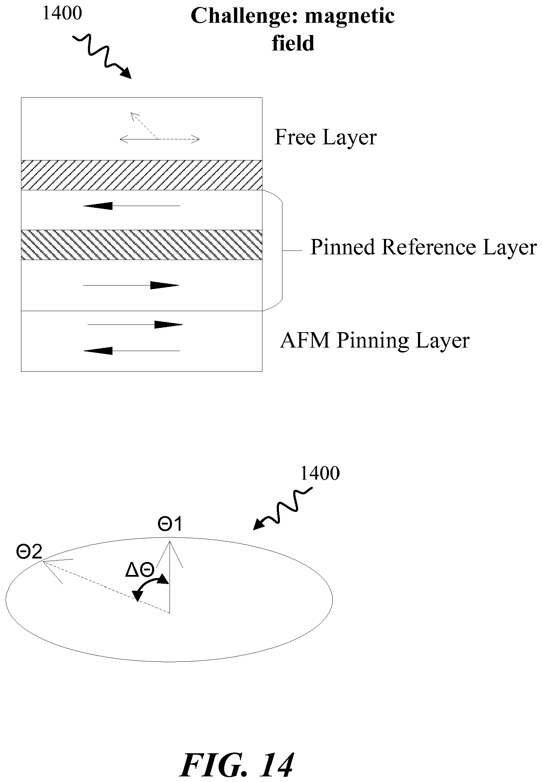

FIG. 14 and Table 1 illustrate how MRAM cells 1100 may be subjected to varying angles Θ of external magnetic fields. The angle Θ is typically varied by more than just 1 or 2 degrees. Typical variations of the magnetic field angle Θ are 30 degrees, 45 degrees, and 90 degrees. However, other implementations use other angle differences of 10 degrees, 25 degrees, etc.

**TABLE 1**

| **Challenge** | **Location** | **Response** |
|---|---|---|
| (x1, y1, θ1) | MTJ 1 | C11 |
| (x1, y1, θ2) | MTJ 1 | C12 |
| (x1, y1, θ3) | MTJ 1 | C13 |
| (x1, y1, θ4) | MTJ 1 | C14 |
| ... | ... | ... |
| (xn, yn, θ1) | MTJ n | Cn1 |
| (xn, yn, θ2) | MTJ n | Cn2 |
| (xn, yn, θ3) | MTJ n | Cn3 |
| (xn, yn, θ4) | MTJ n | Cn4 |
| ... | ... | ... |

A first magnetic field is applied at a first angle Θ1 and resistances are ascertained, and then a second magnetic field is applied at a different angle (e.g., Θ2) and resistances are ascertained a second time. A difference map can be constructed setting a value for each cell location and each MRAM device may have its own unique map. Alternatively, no magnetic field is applied and the MTJs are in antiparallel states when the resistances are ascertained. The resistances are then recorded and they may be used to generate a cryptographic security key or be used as an integrated circuit (IC) identifier.

As stated herein, the PUF is generated by process variations physically. In other words, a randomness is permanently introduced and fixed in the physical details of the manufacturing processes. No post processing is needed for initializing the device. Although applying magnetic fields may be done, the fields are optional. Nor are any other requirements on the MTJ device necessitated or mandated, such as thermal stability. Theoretically, there are not any methods to predict or find out in advance of actually ascertaining MRAM-PUF response data and bit location. The herein described apparatus and methods are environmentally indifferent and tamper resistance. Therefore, issues such as an external magnetic field or a thermal attack are not problematic. The challenge info is public and the response is unique to each PUF device. An external field can be used as a challenge, yet it is not required.

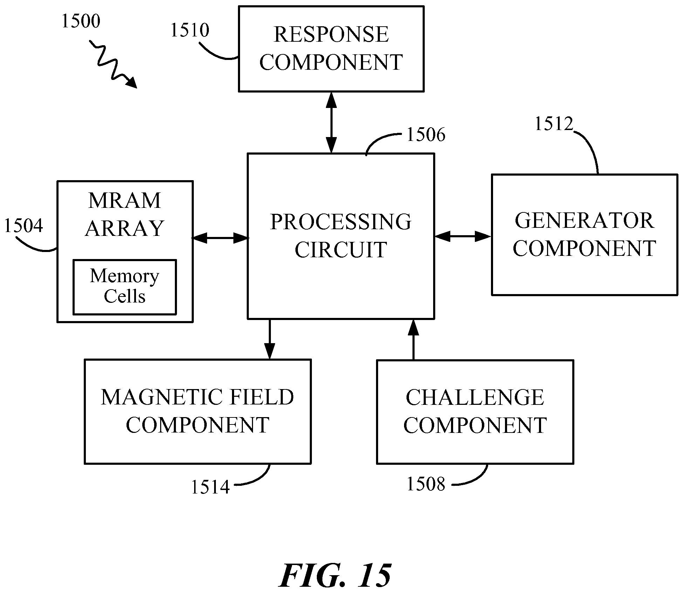

FIG. 15 illustrates an exemplary schematic block diagram of a hardware implementation for an electronic device 1500 that includes an MRAM array 1504. The electronic device 1500 may be a mobile phone, smartphone, tablet, portable computer, and or any other electronic device having circuitry. A processing circuit 1506 may include an MRAM array 1504 of a plurality of memory cells. Each memory cell may comprise two or more magnetic tunnel junctions (MTJs). For example, the MRAM array 1504, memory cells, and/or MTJs may be implemented as illustrated in FIGS. 7-14. The processing circuit 1506 may communicate with the MRAM array 1504 and also controls operation of the MRAM array 1504 by controlling currents and voltages applied to individual cells, by ascertaining resistances of the MTJs within the cells, by reading and writing to the cells and, in general, managing the cells and all data flows into and out of the MRAM array 1504. The processing circuit 1506 may generate PUF maps as described herein and can store the PUF maps. In various examples, the processing circuit 1506 may be on the same chip as the MRAM array 1504, may integrate the MRAM array 1504, or may be separate from the MRAM array 1504. The processing circuit 1506 may control write lines, read lines, and other data lines and/or buses. The processing circuit 1506 may be programmable and may be configured to (e.g., programmed to) do the functions recited herein.

The processing circuit 1506 may include or implement a challenge component 1508 that issues one or more challenges to the MRAM array 1504. The challenges can be through the application of voltage to MTJs of the array and a response component 1510 receives the responses to the challenge. A generator component 1512 can generate a map of the responses to provide a unique identifier for the electron device 1500, the processing circuit 1506, and/or the MRAM array 1504, or subdivisions thereof as described with reference to FIG. 11. Alternatively, the challenge component 1508 issues challenges by employing a magnetic field component 1514. A first magnetic field is applied at a first angle and resistances are ascertained, and then a second magnetic field is applied at a different angle and resistances are ascertained a second time. A difference map can be constructed setting a value for each cell location and each MRAM device has its own unique map. Moreover, a plurality of maps may be generated. For example, one map may be generated for two magnetic fields 30 degrees apart from each other. While another map may be generated for two magnetic fields 60 degrees apart from each other. Furthermore, those last two maps may be used to generate a third map (e.g., 30 degree map minus 60 degree map).

Alternatively, no magnetic field is applied and the MTJs are in antiparallel states when the resistances are ascertained. The resistances (responses to a voltage challenge) are then ascertained by the response component 1510 and they may be used to generate at the generator component 1506 a cryptographic security key or be used as an IC identifier. Note that the challenges sent may be a subset of possible challenges and different challenges are possible for different subdivisions (e.g., one quadrant is challenged with voltage, while another quadrant is challenged with the magnetic field.). The challenges may include cell addresses and voltages. Alternatively, the voltages may have been previously applied, and the challenge includes only cell addresses. However, when the challenge does include voltages, the voltage may come from within a cell array of voltage may come from outside the cell array such as with the application of electromagnetic field. Furthermore, any and all of the components illustrated in FIG. 15, the processing circuit 1506, the challenge component 1508, the response component 1510, the generator component 1512, and the magnetic field component 1514 can be internal to the MRAM array 1504 or external to the MRAM array 1504. The processing circuit 1506, the challenge component 1508, the response component 1510, the generator component 1512, and the magnetic field component 1514 also can be internal or external to the electronic device 1500.

In addition, the challenge component 1508, the response component 1510, the generator component 1512, and the magnetic field component 1514 can be part of the processing circuit 1506, or separate from the processing 1506, and/or combinations thereof. Additionally, some or all of the components can be implemented in hardware and/or software, or both. For example, the magnetic field component 1512 must at least partially be hardware implemented in order to create a magnetic field, but other aspects of the magnetic field component 1514 can be software implemented (e.g., the variations of Θ that are 30 degrees, 45 degrees, and/or 90 degrees can be software implemented).

### Exemplary Challenge Device

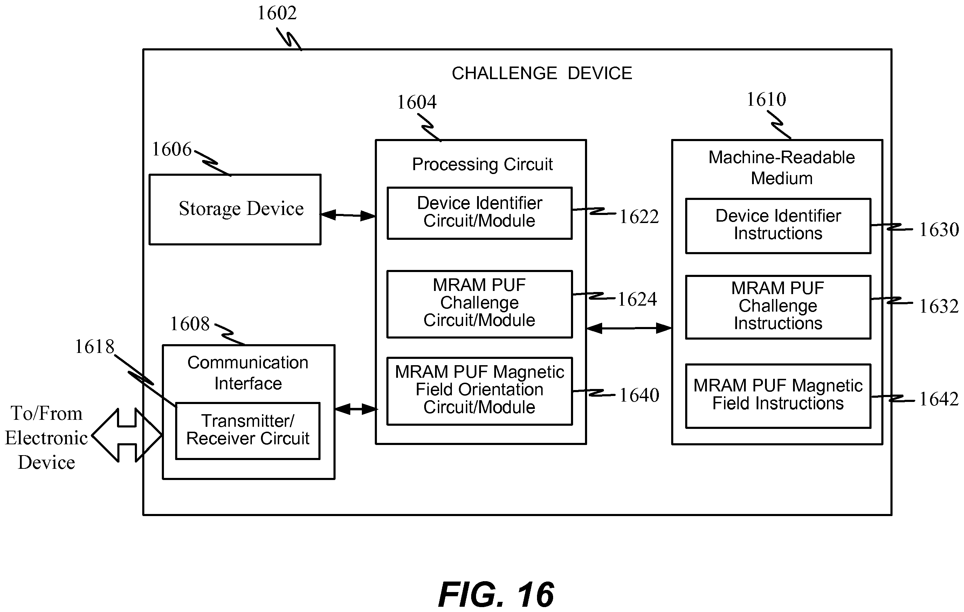

FIG. 16 is a block diagram illustrating an exemplary challenge device 1602 adapted to challenge an electronic device as part of a challenge/response PUF protocol. The challenge device 1602 may be adapted to challenge an electronic device (e.g., chip, semiconductor, memory devices, memory cell array, etc.) and attempt to solicit a response from the electronic device based on the challenge. The challenge device 1602 may include a processing circuit 1604, a storage device 1606, a communication interface 1608, and/or a machine-readable medium 1610. The communication interface 1608 may include a transmitter/receiver circuit 1618 that permits the challenge device 1602 to communicate (e.g., wired or wirelessly) with one or more electronic devices.

The processing circuit 1604 may include a device identifier circuit/module 1622 adapted to obtain a unique device identifier from an electronic device. Using the obtained device identifier, a challenge circuit/module 1624 may check a device identifier database 1616 (in the storage device 1606) for the corresponding challenge/response information associated with that device identifier. For example, some devices may be identified for being voltage challenged while other devices are identified for being magnetic field challenged. Alternatively, some devices may be identified for being magnetic field challenged with fields applied at angles 30 degrees apart, some devices may be identified for being magnetic field challenged with fields applied at angles 45 degree apart. The challenge circuit/module 1624 may then send one or more of the corresponding challenges to the electronic device. In one implementation, for sending a magnetic field challenge, a MRAM PUF magnetic field circuit 1640 generates a magnetic field.

In one example, the challenge device 1602 may include the machine-readable medium 1610 with challenge instructions 1632 such as memory cell addresses and/or different voltage levels and/or different field strengths and/or different field angles in addition to device identifier instructions which enable the challenge device to both identify the array initially and to apply an unique IC identifier to the array based upon PUF responses. Given the stored instructions, the processing circuit 1604 may then challenge the electronic device by issuing one or both of a plurality of memory cell addresses and a directly or indirectly applied voltage to the memory cells in electronic device. In one embodiment, all memory cells have applied voltages, however, in another embodiment, only a subset of all the memory cells have applied voltages.

Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on a computer-readable storage medium. The computer-readable storage medium may be a non-transitory computer-readable storage medium. A non-transitory computer-readable storage medium includes, by way of example, a magnetic storage device (e.g., hard disk, floppy disk, magnetic strip), an optical disk (e.g., a compact disc (CD) or a digital versatile disc (DVD)), a smart card, a flash memory device (e.g., a card, a stick, or a key drive), a random access memory (RAM), a read only memory (ROM), a programmable ROM (PROM), an erasable PROM (EPROM), an electrically erasable PROM (EEPROM), a register, a removable disk, and any other suitable medium for storing software and/or instructions that may be accessed and read by a computer. The computer-readable storage medium may also include, by way of example, a carrier wave, a transmission line, and any other suitable medium for transmitting software and/or instructions that may be accessed and read by a computer. The computer-readable storage medium may be embodied in a computer program product.

Moreover, a storage medium may represent one or more devices for storing data, including read-only memory (ROM), random access memory (RAM), magnetic disk storage mediums, optical storage mediums, flash memory devices and/or other machine-readable mediums and, processor-readable mediums, and/or computer-readable mediums for storing information. The terms "machine-readable medium", "computer-readable medium", and/or "processor-readable medium" may include, but are not limited to non-transitory mediums such as portable or fixed storage devices, optical storage devices, and various other mediums capable of storing, containing or carrying instruction(s) and/or data. Thus, the various methods described herein may be fully or partially implemented by instructions and/or data that may be stored in a "machine-readable medium", "computer-readable medium", and/or "processor-readable medium" and executed by one or more processors, machines, and/or devices.

The machine-readable medium 1610 may include or store device identifier instructions 1630 (e.g., to cause the processing circuit to obtain a device identifier from an electronic device being challenged), MRAM PUF challenge instructions 1632 (e.g., to cause the processing circuit to issue the various challenges), and MRAM PUF magnetic field instructions (e.g., to cause the MRAM PUF magnetic field circuit to specify a field orientation for a challenge).

The challenge device 1602 may be adapted to perform one or more of the steps or functions illustrated in FIGS. 6-15.

### Exemplary Electronic Device

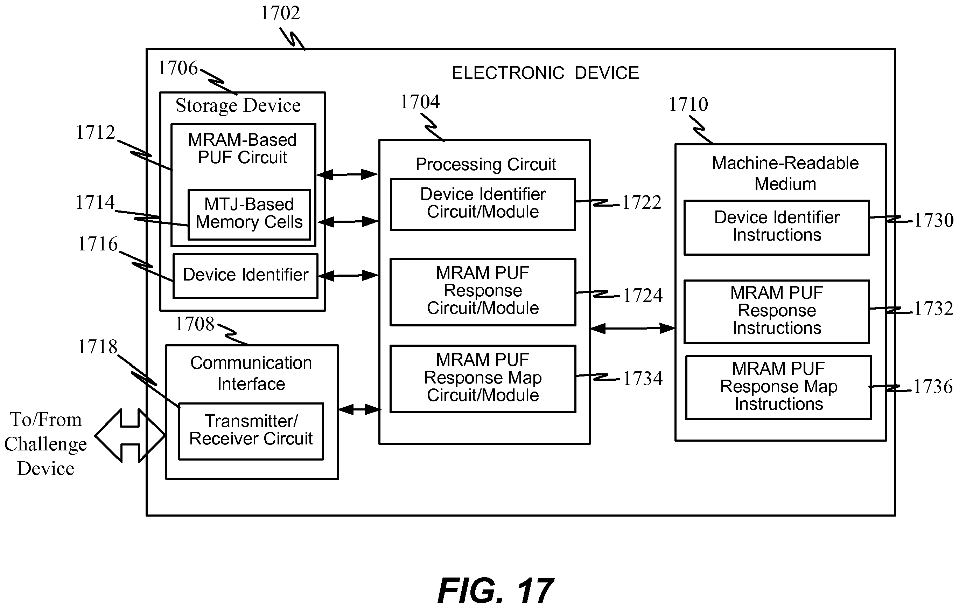

FIG. 17 is a block diagram illustrating an exemplary electronic device 1702 adapted to obtain responses from as part of a challenge/response PUF protocol. The electronic device 1702 (e.g., chip, semiconductor, memory devices, memory cell array, etc.) may include a PUF to which one or more challenges may be applied and one or more responses may be obtained. The electronic device 1702 may include a processing circuit 1704, a storage device 1706, a communication interface 1708, and/or a machine-readable medium 1710. The communication interface 1708 may include a transmitter/receiver circuit 1718 that permits the response device 1702 to communicate (e.g., wired or wirelessly) with one or more electronic devices.

In one example, the storage device 1706 may include a Magnetoresistive Random-Access Memory (MRAM)-based PUF circuit 1712 comprising a plurality of Magnetic Tunnel Junctions (MTJs)-based memory cells 1714. The PUF circuit 1712 and/or memory cells 1714 may be configured to operate as described in FIGS. 6-14.

In various examples, the memory cells 1714 may each include two or more MTJs. Each MTJ may either be an in-plane MTJ or perpendicular MTJ. As illustrated in FIG. 14, each MTJ structure may include a free layer, a tunnel barrier, a synthetic antiferromagnetic (SAF) reference layer, and optionally, an AFM pinning layer. In another example, illustrated in FIG. 7, each MTJ structure may include a free layer, a tunnel barrier, and a single reference layer only.

The processing circuit 1704 may include a device identifier circuit/module 1722 adapted to obtain a unique device identifier 1716 from the electronic device. The obtained device identifier 1716 may be sent to the challenge device in order to obtain a corresponding challenge. Subsequently, a challenge may be received by the electronic device 1702. The challenge may be one or both of a list of memory cell addresses to be read (i.e., have their resistances ascertained) and/or a voltage applied to some or all of the memory cells 1714 of the MRAM based PUF circuit 1712. Additionally, all of the challenge device 1602 illustrated in FIG. 16 may be internal or external to electronic device 1702.

The response circuit/module 1724 may use the challenge to query a PUF, such as MRAM-based PUF circuit 1712 and obtain one or more responses. The one or more responses from the PUF circuit 1712 may then be sent to the challenge device. The electronic device 1702 may be distinct from challenge device, or may be part of challenge device. In one example, a MRAM PUF response map circuit 1734 may use the obtained responses to create a map of the electronic device from which the responses were sent.

The machine-readable medium 1710 may include or store device identifier instructions 1730 (e.g., to cause the processing circuit to obtain a device identifier to send to the challenge device), MRAM PUF response instructions 1732 (e.g., to cause the processing circuit to obtain the various responses from received challenges), and MRAM PUF response map instructions (e.g., to cause the processing circuit to generate at least one map).

The electronic device 1702 may be adapted to perform one or more of the steps or functions illustrated in FIGS. 6-14.

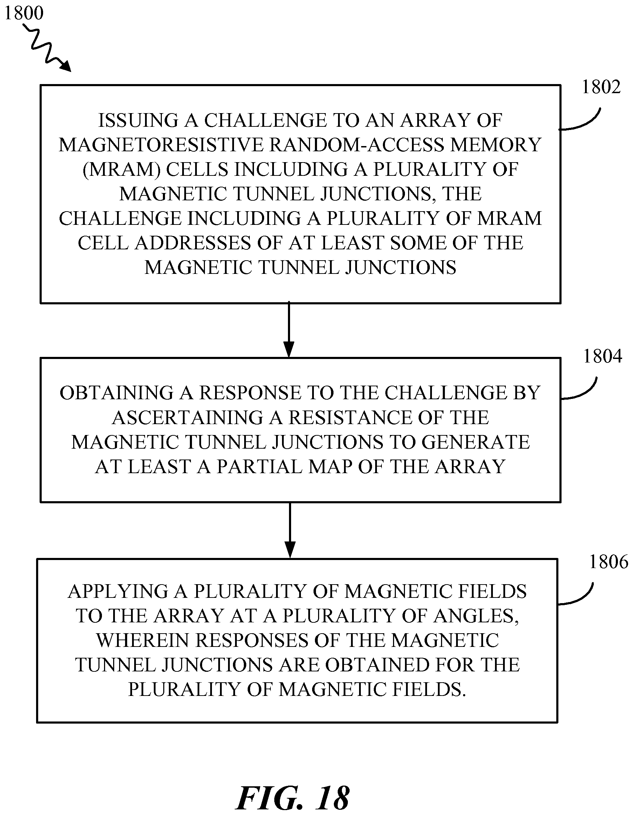

FIG. 18 illustrates a flow diagram 1800 of a method for obtaining a response to a challenge for a physically unclonable function (PUF). A challenge may be issued to an array of magnetoresistive random-access memory (MRAM) cells including a plurality of magnetic tunnel junctions, the challenge including a plurality of MRAM cell addresses of at least some of the magnetic tunnel junctions 1802. A response may be issued to the challenge by ascertaining a resistance of the magnetic tunnel junctions to generate at least a partial map of the array 1804. The voltage may have been subjected to the magnetic tunnel junctions in the directly or indirectly. A plurality of magnetic fields may be applied to the array at a plurality of angles, wherein responses of the magnetic tunnel junctions are obtained for the plurality of magnetic fields 1806. Additionally besides using the electromagnetic fields at different angles, the field strengths can be changed.

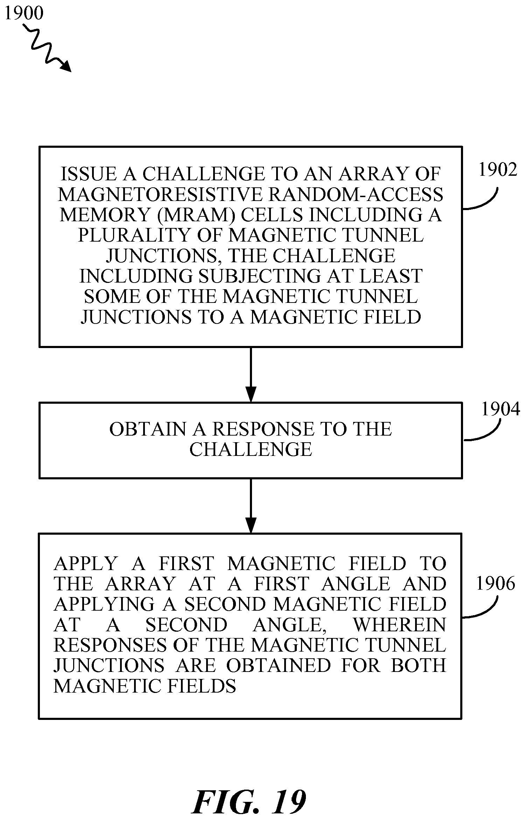

FIG. 19 illustrates a flow diagram 1900 of a method for obtaining a response to a challenge for a physically unclonable function (PUF). A challenge may be issued to an array of magnetoresistive random-access memory (MRAM) cells including a plurality of magnetic tunnel junctions, the challenge including subjecting at least some of the magnetic tunnel junctions to a magnetic field 1902. A response may then be obtained for the challenge 1904. A first magnetic field may be applied to the array at a first angle and applying a second magnetic field at a second angle, wherein responses of the magnetic tunnel junctions are obtained for both magnetic fields 1906. As described above with respect to FIG. 8 any of the described difference maps may be generated and used to create a chip identifier.

Herein described are apparatus and methods of generating a response to a challenge for a physically unclonable function (PUF), wherein the method includes issuing a challenge to an array of magnetoresistive random-access memory (MRAM) cells including magnetic tunnel junctions, the challenge including subjecting at least some of the magnetic tunnel junctions to a voltage, and obtaining a response to the challenge by ascertaining the resistance of the (voltage subjected) magnetic tunnel junctions to generate a map of the array. Each MRAM includes two magnetic tunnel junctions, wherein in some implementations both magnetic tunnel junctions have their resistances ascertained. Moreover, in other implementations, only one of the magnetic tunnel junctions has its resistance ascertained.

One or more of the components, steps, features, and/or functions illustrated in the Figures may be rearranged and/or combined into a single component, step, feature, or function or embodied in several components, steps, or functions. Additional elements, components, steps, and/or functions may also be added without departing from novel features disclosed herein. The apparatus, devices, and/or components illustrated in the Figures may be configured to perform one or more of the methods, features, or steps described in the Figures. The novel algorithms described herein may also be efficiently implemented in software and/or embedded in hardware.

In addition, it is noted that the embodiments may be described as a process that is depicted as a flowchart, a flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed. A process may correspond to a method, a function, a procedure, a subroutine, a subprogram, etc. When a process corresponds to a function, its termination corresponds to a return of the function to the calling function or the main function.

Moreover, a storage medium may represent one or more devices for storing data, including read-only memory (ROM), random access memory (RAM), magnetic disk storage mediums, optical storage mediums, flash memory devices, and/or other machine-readable mediums for storing information. The term "machine readable medium" includes, but is not limited to portable or fixed storage devices, optical storage devices, wireless channels and various other mediums capable of storing, containing, or carrying instruction(s) and/or data.

Furthermore, embodiments may be implemented by hardware, software, firmware, middleware, microcode, or any combination thereof. When implemented in software, firmware, middleware, or microcode, the program code or code segments to perform the necessary tasks may be stored in a machine-readable medium such as a storage medium or other storage(s). A processor may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

The various illustrative logical blocks, modules, circuits, elements, and/or components described in connection with the examples disclosed herein may be implemented or performed with a general purpose processor, a digital signal processor (DSP), an application specific integrated circuit (ASIC), a field programmable gate array (FPGA) or other programmable logic component, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing components, e.g., a combination of a DSP and a microprocessor, a number of microprocessors, one or more microprocessors in conjunction with a DSP core, or any other such configuration.

The methods or algorithms described in connection with the examples disclosed herein may be embodied directly in hardware, in a software module executable by a processor, or in a combination of both, in the form of processing unit, programming instructions, or other directions, and may be contained in a single device or distributed across multiple devices. A software module may reside in RAM memory, flash memory, ROM memory, EPROM memory, EEPROM memory, registers, hard disk, a removable disk, a CD-ROM, or any other form of storage medium known in the art. A storage medium may be coupled to the processor such that the processor can read information from, and write information to, the storage medium. In the alternative, the storage medium may be integral to the processor.

Those of skill in the art would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system.

The various features of the invention described herein can be implemented in different systems without departing from the invention. It should be noted that the foregoing embodiments are merely examples and are not to be construed as limiting the invention. The description of the embodiments is intended to be illustrative, and not to limit the scope of the claims. As such, the present teachings can be readily applied to other types of apparatuses and many alternatives, modifications, and variations will be apparent to those skilled in the art.

## Claims

1. A method for implementing a physically unclonable function (PUF) using an array of magnetoresistive random-access memory (MRAM) cells having magnetic tunnel junctions, **characterised in that** the method comprises:
issuing a challenge (1802) by applying a physically unclonable function (PUF) challenge signal to a particular array ofmagnetoresistive random-access memory (MRAM) cells having a plurality of magnetic tunnel junctions with randomly varying resistances, the challenge signal specifying a plurality of MRAM cell addresses of at least some of the magnetic tunnel junctions of the particular array; and
obtaining (1804) a physically unclonable function (PUF) response to the challenge by ascertaining a resistance of the magnetic tunnel junctions of the plurality of MRAM cell addresses of the particular array to generate a physically unclonable function (PUF) signal representative of at least a partial map of the particular array that identifies the particular array and distinguishes the particular array from other similar arrays.

2. The method of claim 1, further comprising:
applying a magnetic field (1806) to the array to arrange all the magnetic tunnel junctions in a fixed orientation prior to obtaining the response.

3. The method of claim 1, wherein the MRAM cells are uninitialized when the response is obtained (1804) so that the physically unclonable function (PUF) signal is representative of uninitialized memory values.

4. The method of claim 1, wherein the MRAM cells each include two magnetic tunnel junctions (MTJ_1, MTJ_2), and wherein obtaining the response includes ascertaining a relative resistance between the two magnetic tunnel junctions (MTJ_1, MTJ_2) or a resistance for each of the two magnetic tunnel junctions (MTJ_1, MTJ_2).

5. The method of claim 4, wherein obtaining the response includes ascertaining a resistance for each of the two magnetic tunnel junctions (MTJ_1, MTJ_2), the method further comprising:
using both ascertained resistances of the two magnetic tunnel junctions (MTJ_1, MTJ_2) to generate a cell value for each MRAM cell address in the challenge.

6. The method of claim 5, further comprising:
using both ascertained resistances of the two magnetic tunnel junctions (MTJ_1, MTJ_2) to generate a cell value for each MRAM cell ascertained by subtracting one of ascertained resistance values from the other ascertained resistance value to generate a resistance difference value for each MRAM cell address in the challenge.

7. The method of claim 5, further comprising:
using both ascertained resistances of the two magnetic tunnel junctions (MTJ_1, MTJ_2) to generate a cell value (Cell_{dif}) for each MRAM cell ascertained by subtracting one of ascertained resistance values from the other ascertained resistance to generate a resistance difference value for each MRAM cell address in the challenge; and
generating the at least partial map of the array using the Cell_{dif} values.

8. The method of claim 5, further comprising:
using both ascertained resistances of the two magnetic tunnel junctions (MTJ_1, MTJ_2) to generate a cell value for each MRAM cell by subtracting one of ascertained resistance values from the other ascertained resistance value to generate a resistance difference value for each MRAM cell address in the challenge;
altering at least one of the generated resistance difference values to obtain at least one altered resistance difference value for at least one MRAM cell address in the challenge in order to increase a level of complexity; and
generating the at least partial map of the array using the altered resistance difference value.

9. The method of claim 1, further comprising:
generating at least one of a cryptographic security key and/or an electronic device identifier based on the at least partial map of the array.

10. A device for implementing a physically unclonable function (PUF) using an array of magnetoresistive random-access memory (MRAM) cells having magnetic tunnel junctions **characterised in that** the device comprises:
means for issuing a challenge by applying a physically unclonable function (PUF) challenge signal to a particular array of magnetoresistive random-access memory (MRAM) cells having a plurality of magnetic tunnel junctions with randomly varying resistances, the challenge signal specifying a plurality of MRAM cell addresses of at least some of the magnetic tunnel junctions of the particular array; and
means for obtaining physically unclonable function (PUF) response to the challenge by ascertaining the resistance of the magnetic tunnel junctions of the plurality of MRAM cell addresses of the particular array to generate a physically unclonable function (PUF) signal representative of at least a partial map of the particular array that identifies the particular array and distinguishes the particular array from other similar arrays.

11. The device of claim 10, further comprising:
means for applying a magnetic field to the array to arrange all the magnetic tunnel junctions in a fixed orientation prior to obtaining the response.

12. The device of claim 10, wherein each MRAM cell includes two magnetic tunnel junctions and wherein the device further comprises:
means for obtaining a response to the challenge by ascertaining the resistance of both of two magnetic tunnel junctions (MTJ_1, MTJ_2) in each MRAM cell.

13. The device of claim 10, wherein the means for obtaining a physically unclonable function (PUF) response is operative to obtain the response while the MRAM cells are uninitialized so that the physically unclonable function (PUF) signal is representative of uninitialized memory values.

14. The device of claim 10, further comprising:
means for generating at least one of a cryptographic security key and/or an electronic device identifier based on the at least partial map of the array.

15. A non-transitory machine-readable storage medium for implementing a physically unclonable function (PUF) using an array of magnetoresistive random-access memory (MRAM) cells having magnetic tunnel junctions with randomly-varying resistances, the storage medium having instructions stored thereon which when executed by at least one processor causes the at least one processor to perform the method according to any one of claims 1 to 9.

## Patentansprüche

1. Verfahren zum Implementieren einer physikalisch unklonbaren Funktion (PUF) mit einem Array von MRAM-(Magnetoresistive Random Access Memory)-Zellen mit magnetischen Tunnelübergängen, **dadurch gekennzeichnet, dass** das Verfahren Folgendes beinhaltet:
Ausgeben eines Challenge (1802) durch Anlegen eines PUF-(physikalisch unklonbare Funktion)-Challenge-Signals an ein bestimmtes Array von MRAM-(Magnetoresistive Random Access Memory)-Zellen mit mehreren magnetischen Tunnelübergängen mit zufällig variierenden Widerständen, wobei das Challenge-Signal mehrere MRAM-Zelladressen von wenigstens einem der magnetischen Tunnelübergänge des bestimmten Array vorgibt; und
Einholen (1804) einer PUF-(physikalisch unklonbare Funktion)-Antwort auf das Challenge durch Feststellen eines Widerstands der magnetischen Tunnelübergänge der mehreren MRAM-Zelladressen des bestimmten Array zum Erzeugen eines PUF-(physikalisch unklonbare Funktion)-Signals, das wenigstens eine teilweise Abbildung des bestimmten Array repräsentiert, die das bestimmte Array identifiziert und das bestimmte Array von anderen ähnlichen Arrays unterscheidet.

2. Verfahren nach Anspruch 1, das ferner Folgendes beinhaltet:
Anlegen eines Magnetfelds (1806) an das Array zum Anordnen aller magnetischen Tunnelübergänge in einer festen Orientierung vor dem Einholen der Antwort.

3. Verfahren nach Anspruch 1, wobei die MRAM-Zellen uninitialisiert sind, wenn die Antwort eingeholt (1804) wird, so dass das PUF-(physikalisch unklonbare Funktion)-Signal die uninitialisierten Speicherwerte repräsentiert.

4. Verfahren nach Anspruch 1, wobei die MRAM-Zellen jeweils zwei magnetische Tunnelübergänge (MTJ_1, MTJ_2) beinhalten und wobei das Einholen der Antwort das Feststellen eines relativen Widerstands zwischen den beiden magnetischen Tunnelübergängen (MTJ_1, MTJ_2) oder eines Widerstands für jeden der zwei magnetischen Tunnelübergänge (MTJ_1, MTJ_2) beinhaltet.

5. Verfahren nach Anspruch 4, wobei das Einholen der Antwort das Feststellen eines Widerstands für jeden der zwei magnetischen Tunnelübergänge (MTJ_1, MTJ_2) beinhaltet, wobei das Verfahren ferner Folgendes beinhaltet:
Benutzen beider festgestellter Widerstände der beiden magnetischen Tunnelübergänge (MTJ_1, MTJ_2) zum Erzeugen eines Zellwertes für jede MRAM-Zelladresse in dem Challenge.

6. Verfahren nach Anspruch 5, das ferner Folgendes beinhaltet:
Benutzen beider festgestellter Widerstände der beiden magnetischen Tunnelübergänge (MTJ_1, MTJ_2) zum Erzeugen eines Zellwertes für jede MRAM-Zelle, die durch Subtrahieren von einem der festgestellten Widerstandswerte von dem anderen festgestellten Widerstandswert festgestellt wird, zum Erzeugen eines Widerstandsdifferenzwertes für jede MRAM-Zelladresse in dem Challenge.

7. Verfahren nach Anspruch 5, das ferner Folgendes beinhaltet:
Benutzen beider festgestellter Widerstände der beiden magnetischen Tunnelübergänge (MTJ_1, MTJ_2) zum Erzeugen eines Zellwertes (Cell_{dif}) für jede MRAM-Zelle, festgestellt durch Subtrahieren von einem von festgestellten Widerstandswerten von dem anderen festgestellten Widerstand zum Erzeugen eines Widerstandsdifferenzwertes für jede MRAM-Zelladresse in dem Challenge; und
Erzeugen der wenigstens teilweisen Abbildung des Array mit den Cell_{dif}-Werten.

8. Verfahren nach Anspruch 5, das ferner Folgendes beinhaltet:
Benutzen beider festgestellter Widerstände der beiden magnetischen Tunnelübergänge (MTJ_1, MTJ_2) zum Erzeugen eines Zellenwertes für jede MRAM-Zelle durch Subtrahieren von einem von festgestellten Widerstandswerten von dem anderen festgestellten Widerstandswert zum Erzeugen eines Widerstandsdifferenzwertes für jede MRAM-Zelladresse in dem Challenge;
Verändern von wenigstens einem der erzeugten Widerstandsdifferenzwerte zum Einholen von wenigstens einem veränderten Widerstandsdifferenzwert für wenigstens eine MRAM-Zelladresse in dem Challenge, um ein Komplexitätsniveau zu erhöhen; und
Erzeugen der wenigstens teilweisen Abbildung des Array anhand des veränderten Widerstandsdifferenzwertes.

9. Verfahren nach Anspruch 1, das ferner Folgendes beinhaltet:
Erzeugen wenigstens eines aus einem kryptografischen Sicherheitsschlüssel und/oder einer elektronischen Gerätekennung auf der Basis der wenigstens teilweisen Abbildung des Array.

10. Vorrichtung zum Implementieren einer physikalisch unklonbaren Funktion (PUF) unter Verwendung eines Array von MRAM-(Magnetoresistive Random Access Memory)-Zellen mit magnetischen Tunnelübergängen, **dadurch gekennzeichnet, dass** die Vorrichtung Folgendes umfasst:
Mittel zum Ausgeben eines Challenge durch Anlegen eines PUF-(physikalisch unklonbare Funktion)-Challenge-Signals an ein bestimmtes Array von MRAM-(Magnetoresistive Random Access Memory)-Zellen mit mehreren magnetischen Tunnelübergängen mit zufällig variierenden Widerständen, wobei das Challenge-Signal mehrere MRAM-Zelladressen von wenigstens einigen der magnetischen Tunnelübergänge des bestimmten Array vorgibt; und
Mittel zum Einholen einer PUF-(physikalisch unklonbare Funktion)-Antwort auf das Challenge durch Feststellen des Widerstands der magnetischen Tunnelübergänge der mehreren MRAM-Zelladressen des bestimmten Array zum Erzeugen eines PUF-(physikalisch unklonbare Funktion)-Signals, das wenigstens eine teilweise Abbildung des bestimmten Array repräsentiert, die das bestimmte Array identifiziert und das bestimmte Array von anderen ähnlichen Arrays unterscheidet.

11. Vorrichtung nach Anspruch 10, die ferner Folgendes umfasst:
Mittel zum Anlegen eines Magnetfelds an das Array zum Anordnen aller magnetischen Tunnelübergänge in einer festen Orientierung vor dem Einholen der Antwort.

12. Vorrichtung nach Anspruch 10, wobei jede MRAM-Zelle zwei magnetische Tunnelübergänge beinhaltet und wobei die Vorrichtung ferner Folgendes umfasst:
Mittel zum Einholen einer Antwort auf das Challenge durch Feststellen des Widerstands von beiden von zwei magnetischen Tunnelübergängen (MTJ_1, MTJ_2) in jeder MRAM-Zelle.

13. Vorrichtung nach Anspruch 10, wobei das Mittel zum Einholen einer PUF-(physikalisch unklonbare Funktion)-Antwort die Aufgabe hat, die Antwort einzuholen, während die MRAM-Zellen uninitialisiert sind, so dass das PUF-(physikalisch unklonbare Funktion)-Signal uninitialisierte Speicherwerte repräsentiert.

14. Vorrichtung nach Anspruch 10, die ferner Folgendes umfasst:
Mittel zum Erzeugen wenigstens eines aus einem kryptografischen Sicherheitsschlüssel und/oder einer elektronischen Gerätekennung auf der Basis der wenigstens teilweisen Abbildung des Array.

15. Nichtflüchtiges maschinenlesbares Speichermedium zum Implementieren einer physikalisch unklonbaren Funktion (PUF) mittels eines Array von MRAM-(Magnetoresistive Random Access Memory)-Zellen mit magnetischen Tunnelübergängen mit zufällig variierenden Widerständen, wobei auf dem Speichermedium Befehle gespeichert sind, die bei Ausführung durch wenigstens einen Prozessor bewirken, dass der wenigstens eine Prozessor das Verfahren nach einem der Ansprüche 1 bis 9 ausführt.

## Revendications

1. Procédé de mise en oeuvre d'une fonction physiquement inclonable (PUF) au moyen d'un réseau de cellules de mémoire vive magnétorésistive (MRAM) ayant des jonctions tunnel magnétiques, **caractérisé en ce que** le procédé comprend :
l'émission d'un défi (1802) en appliquant un signal de défi de fonction physiquement inclonable (PUF) à un réseau particulier de cellules de mémoire vive magnétorésistive (MRAM) ayant une pluralité de jonctions tunnel magnétiques à résistances variant de manière aléatoire, le signal de défi spécifiant une pluralité d'adresses de cellules MRAM d'au moins certaines des jonctions tunnel magnétiques du réseau particulier ; et
l'obtention (1804) d'une réponse de fonction physiquement inclonable (PUF) au défi en établissant une résistance des jonctions tunnel magnétiques de la pluralité d'adresses de cellules MRAM du réseau particulier pour générer un signal de fonction physiquement inclonable (PUF) représentatif d'une carte au moins partielle du réseau particulier qui identifie le réseau particulier et différencie le réseau particulier d'autres réseaux semblables.

2. Procédé selon la revendication 1, comprenant en outre :
l'application d'un champ magnétique (1806) au réseau pour agencer toutes les jonctions tunnel magnétiques dans une orientation fixe avant l'obtention de la réponse.

3. Procédé selon la revendication 1, dans lequel les cellules MRAM sont non initialisées quand la réponse est obtenue (1804) si bien que le signal de fonction physiquement inclonable (PUF) représente des valeurs de mémoire non initialisées.

4. Procédé selon la revendication 1, dans lequel les cellules MRAM comportent chacune deux jonctions tunnel magnétiques (MTJ_1, MTJ_2), et dans lequel l'obtention de la réponse comporte l'établissement d'une résistance relative entre les deux jonctions tunnel magnétiques (MTJ_1, MTJ_2) ou d'une résistance pour chacune des deux jonctions tunnel magnétiques (MTJ_1, MTJ_2).

5. Procédé selon la revendication 4, dans lequel l'obtention de la réponse comporte l'établissement d'une résistance pour chacune des deux jonctions tunnel magnétiques (MTJ_1, MTJ_2), le procédé comprenant en outre :
l'utilisation des deux résistances déterminées des deux jonctions tunnel magnétiques (MTJ_1, MTJ_2) pour générer une valeur de cellule pour chaque adresse de cellule MRAM dans le défi.

6. Procédé selon la revendication 5, comprenant en outre :
l'utilisation des deux résistances établies des deux jonctions tunnel magnétiques (MTJ_1, MTJ_2) pour générer une valeur de cellule pour chaque cellule MRAM établie en soustrayant l'une des valeurs de résistance établies de l'autre valeur de résistance établie pour générer une valeur de différence de résistance pour chaque adresse de cellule MRAM dans le défi.

7. Procédé selon la revendication 5, comprenant en outre :
l'utilisation des deux résistances établies des deux jonctions tunnel magnétiques (MTJ_1, MTJ_2) pour générer une valeur de cellule (Celldif) pour chaque cellule MRAM établie en soustrayant l'une des valeurs de résistance établies de l'autre valeur de résistance établie pour générer une valeur de différence de résistance pour chaque adresse de cellule MRAM dans le défi ; et
la génération de la carte au moins partielle du réseau en utilisant les valeurs Cell_{dif}.

8. Procédé selon la revendication 5, comprenant en outre :
l'utilisation des deux résistances établies des deux jonctions tunnel magnétiques (MTJ_1, MTJ_2) pour générer une valeur de cellule pour chaque cellule MRAM établie en soustrayant l'une des valeurs de résistance établies de l'autre valeur de résistance établie pour générer une valeur de différence de résistance pour chaque adresse de cellule MRAM dans le défi ;
la modification d'au moins l'une des valeurs de différence de résistance générées pour obtenir au moins une valeur de différence de résistance modifiée pour au moins une adresse de cellule MRAM dans le défi afin d'augmenter un niveau de complexité ; et
la génération de la carte au moins partielle du réseau en utilisant la valeur de différence de résistance modifiée.

9. Procédé selon la revendication 1, comprenant en outre.
la génération d'au moins l'une d'une clé de sécurité cryptographique et/ou d'un identifiant de dispositif électronique en fonction de la carte au moins partielle du réseau.

10. Dispositif de mise en oeuvre d'une fonction physiquement inclonable (PUF) au moyen d'un réseau de cellules de mémoire vive magnétorésistive (MRAM) ayant des jonctions tunnel magnétiques, **caractérisé en ce que** le dispositif comprend :
un moyen d'émission d'un défi en appliquant un signal de défi de fonction physiquement inclonable (PUF) à un réseau particulier de cellules de mémoire vive magnétorésistive (MRAM) ayant une pluralité de jonctions tunnel magnétiques à résistances variant de manière aléatoire, le signal de défi spécifiant une pluralité d'adresses de cellules MRAM d'au moins certaines des jonctions tunnel magnétiques du réseau particulier ; et
un moyen d'obtention d'une réponse de fonction physiquement inclonable (PUF) au défi en établissant une résistance des jonctions tunnel magnétiques de la pluralité d'adresses de cellules MRAM du réseau particulier pour générer un signal de fonction physiquement inclonable (PUF) représentatif d'une carte au moins partielle du réseau particulier qui identifie le réseau particulier et différencie le réseau particulier d'autres réseaux semblables.

11. Dispositif selon la revendication 10, comprenant en outre un moyen d'application d'un champ magnétique au réseau pour agencer toutes les jonctions tunnel magnétiques dans une orientation fixe avant l'obtention de la réponse.

12. Dispositif selon la revendication 10, dans lequel chaque cellule MRAM comporte deux jonctions tunnel magnétiques et le dispositif comprenant en outre :
un moyen d'obtention d'une réponse au défi en établissant la résistance des deux jonctions tunnel magnétiques (MTJ_1, MTJ_2) dans chaque cellule MRAM.

13. Dispositif selon la revendication 10, dans lequel le moyen d'obtention d'une fonction physiquement inclonable (PUF) sert à obtenir la réponse pendant que les cellules MRAM sont non initialisées si bien que le signal de fonction physiquement inclonable (PUF) représente des valeurs de mémoire non initialisées.

14. Dispositif selon la revendication 10, comprenant en outre
un moyen de génération d'au moins l'une d'une clé de sécurité cryptographique et/ou d'un identifiant de dispositif électronique en fonction de la carte au moins partielle du réseau.

15. Support de mémorisation non transitoire lisible par machine destiné à mettre en oeuvre une fonction physiquement inclonable (PUF) au moyen d'un réseau de cellules de mémoire vive magnétorésistive (MRAM) ayant des jonctions tunnel magnétiques à résistances variant de manière aléatoire, le support de mémorisation comportant des instructions mémorisées qui, à leur exécution par au moins un processeur, amènent l'au moins un processeur à exécuter le procédé selon l'une quelconque des revendications 1 à 9.
